# EUROPÄISCHE PATENTANMELDUNG

(11) **EP 3 771 979 A1**
(43) Veröffentlichungstag der Anmeldung: **03.02.2021**
(21) Anmeldenummer: 19189395.7
(22) Anmeldetag: 31.07.2019
(51) Int. Cl.: G06F 8/38, G06F 9/451, G06N 5/00

(54) **VERFAHREN UND VORRICHTUNG ZUR OPTIMALEN KONFIGURATION EINES GERÄTS EINER GERÄTEKLASSE**

(71) Anmelder: Siemens Schweiz AG, 8047 Zürich (CH)
(72) Erfinder: DHUNGANA, Deepak, 2201 Seyring (AT); EHLMAIER, Max Paul, 1060 Wien (AT); TAUPE, Richard, 1160 Wien (AT)
(74) Vertreter: Maier, Daniel Oliver

(57) **Zusammenfassung**

Verfahren zur optimalen Konfiguration eines Geräts (11) einer Geräteklasse (10), wobei folgende Schritte ausgeführt werden:
a) Erfassen eines wissensbasierten, formalen Geräte-Modells (101),
b) Erfassen eines abstrakten Benutzereingabe-Modells (102),
c) Bestimmen eines dynamischen Benutzereingabe-Modells (110) für das Gerät (11) unter Verwendung des formalen Geräte-Modells (101), des abstrakten Benutzereingabe-Modells (102) und zumindest eines Datensatzes (131, 132) aus einer Konfigurations-Datenbank (31) oder einer Nutzungs-Datenbank (32),
d) Erzeugen eines Benutzereingabe-Dialogs mithilfe des dynamischen Benutzereingabe-Modells (110),
e) Erfassen von Konfigurations-Daten (121) und von Nutzungs-Daten (122) für das Gerät (11) durch den Benutzereingabe-Dialog,
f) Festlegen eines optimalen Konfigurations-Datensatzes (1) auf Basis der im Schritt e) erfassten Konfigurations-Daten (121) und Nutzungs-Daten (122) für das Gerät (11),
g) Statistisches Auswerten und Abspeichern der Konfigurations-Daten (121) in der Konfigurations-Datenbank (31) und der Nutzungs-Daten (122) in der Nutzungs-Datenbank (32),
h) Konfigurieren des Geräts (11) mit dem optimalen Konfigurations-Datensatz (1).

## Beschreibung

Die Erfindung betrifft ein Verfahren und eine Vorrichtung zur optimalen Konfiguration eines Geräts einer Geräteklasse.

Produktkonfiguration ist in der Industrie eine gängige Praxis, um Kunden Produktvarianten anzubieten, die individuellen Anforderungen entsprechen. Heutzutage erfolgt dies häufig, indem eine Produktvariabilität formal modelliert und den Benutzern als Optionen angeboten wird.

Jedoch kann eine Produktkonfiguration eine sehr große Anzahl von Parametern aufweisen, welche zudem miteinander verknüpft sein können, um eine optimale Konfiguration für einen bestimmten Betriebsmodus zu erhalten. Daher kann eine sehr große Komplexität für eine Konfiguration entstehen, welche häufig nur von sehr gut geschultem und erfahrenem Personal durchgeführt werden kann. Um die Kosten für eine Konfiguration gering zu halten kann es daher dazu kommen, dass nur eine eingeschränkte Anzahl an Parameterkonfigurationen für eine Produkt angeboten werden und die Variabilität eines Produkts nicht optimal ausgeschöpft wird.

In der Regel wird eine Benutzeroberfläche manuell erstellt, welche manuell angepasst werden kann, beispielsweise Farben, Schriftarten oder Layouts bestimmter Elemente. Ein derartiger statischer, präferenzbasierter Ansatz der UI-Anpassung ist begrenzt.

Es ist Aufgabe der Erfindung die Nachteile im Stand der Technik zu überwinden und eine Produktkonfiguration zu vereinfachen und die Variabilität eines Produkts zu verbessern.

Die erfindungsgemäße Aufgabe wird durch ein Verfahren eingangs genannter Art gelöst, wobei folgende Schritte ausgeführt werden:
a) Erfassen eines wissensbasierten, formalen Geräte-Modells der Geräteklasse,
b) Erfassen eines abstrakten Benutzereingabe-Modells für die Geräteklasse,
c) Bestimmen eines dynamischen Benutzereingabe-Modells für das Gerät unter Verwendung des formalen Geräte-Modells, des abstrakten Benutzereingabe-Modells und zumindest eines Datensatzes aus einer Konfigurations-Datenbank oder einer Nutzungs-Datenbank,
d) Erzeugen eines Benutzereingabe-Dialogs mithilfe des dynamischen Benutzereingabe-Modells,
e) Erfassen von Konfigurations-Daten und von Nutzungs-Daten für das Gerät durch den Benutzereingabe-Dialog,
f) Festlegen eines optimalen Konfigurations-Datensatzes auf Basis der im Schritt e) erfassten Konfigurations-Daten und Nutzungs-Daten für das Gerät,
g) Statistisches Auswerten und Abspeichern der Konfigurations-Daten in der Konfigurations-Datenbank und der Nutzungs-Daten in der Nutzungs-Datenbank,
h) Konfigurieren des Geräts mit dem optimalen Konfigurations-Datensatz.

Formales Wissen über ein zu konfigurierendes Produkt ist als Wissensbasis ("Knowledge Base", KB) bekannt, die unter Verwendung formaler Methoden modelliert werden kann, wie beispielsweise in Form eines Constraint-Programms. Ein solches Modell enthält Variablen und Regeln, sogenannte "Constraints", welche die Gültigkeit der Werte regeln, die diesen Variablen zugewiesen werden können. Dadurch ist für einen Bediener eines Konfigurators nicht unbedingt notwendig, alle Detailinformationen eines solchen Modells zu verstehen.

Es kann daher ausreichen, nur bestimmte Elemente eines solchen Modells, wie Constraint-Variablen, einem Bediener über eine Benutzeroberfläche ("User Interface", UI) zugänglich zu machen.

Zwischen der KB und der UI enthält ein UI-Design die Spezifikation einer Zuordnung von KB-Elementen zu UI-Elementen, wie beispielsweise eine Ganzzahlvariable für ein Textfeld oder eine Aufzählungsvariable für eine Dropdown-Liste. Typischerweise ist das Design der Benutzeroberfläche ein großer manueller Aufwand, bei dem versucht wird, die Usability-Anforderungen der Benutzer zu verstehen.

Während der Konfiguration werden dem Benutzer die verfügbaren Optionen angezeigt. Wenn der Benutzer bestimmte Werte für bestimmte Variablen auswählt, werden der Konfiguration neue Einschränkungen hinzugefügt, wodurch der Lösungsraum eingeschränkt wird und schließlich eine Lösung für das Konfigurationsproblem gefunden wird, das heißt ein optimal angepasstes beziehungsweise optimal konfiguriertes Produkt zur weiteren Verwendung in einem speziellen Gebiet.

Eine optimale Gestaltung der Benutzeroberfläche ist eine große Herausforderung, da sie von der Rolle der Person abhängt, welche den Konfigurator verwendet. Beispielsweise kann die Anordnung der UI-Elemente davon abhängen, wie stark ein Benutzer auf die Produktmerkmale Wert legt. Personen mit höherem Interesse an technischen Merkmalen möchten möglicherweise andere Fragen sehen als Personen, die mehr an der äußeren Gestaltung des Produkts interessiert sind. Ebenso interessiert sich eine Person, die nach der günstigsten Lösung sucht, für andere Optionen als eine Person, die nach der nachhaltigsten Lösung sucht.

Für die optimale Gestaltung der Benutzeroberfläche kann es vorgesehen sein, beispielsweise günstige Vorbelegungen von Parametern vorzuschlagen, eine logische Reihenfolge einzelner Konfigurationsschritte vorzusehen oder Parameter vorteilhaft zu gruppieren.

Die Benutzeroberfläche sollte auch so gestaltet sein, dass eine gewünschte Konfiguration mit minimalem Aufwand erreicht werden kann, wie eine Anzahl an Klicks, eine Abfolge an Klicks, die benötigte Zeit zur Festlegung eines oder mehrerer Konfigurationsparameter, die Anzahl von möglicherweise widersprüchlichen Festlegungen oder Einschränkungen, die Anzahl von Fehlermeldungen während dem Konfigurationsvorgang, oder auch Benutzer-Aktivitäten neben dem Konfigurationsvorgang.

Die Erfindung ermöglich es individuelle Anforderungen eines Benutzers an die Benutzeroberfläche eines Konfigurators, sowie das Benutzerverhalten während der Konfiguration bei der Erfassung von Konfigurationsparametern in Form einer dynamisch anpassbaren Benutzeroberfläche (UI) zu berücksichtigen.

Ferner kann erreicht werden, dass beispielsweise besonders gute oder auch besonders fehlerhafte Konfigurationen aus einer Vielzahl an bereits durchgeführten Konfigurationen von Geräten statistisch ausgewertet werden und eine automatische Anpassung der Benutzeroberfläche erfolgt, um erkannte Vorteile oder auch Nachteile einer aktuellen Benutzeroberfläche zu verwerten und die aktuellen Benutzeroberfläche dementsprechend anzupassen.

Die Konfigurations-Datenbank und die Nutzungs-Datenbank können auch durch eine gemeinsame Datenbank gebildet sein.

In einer Weiterbildung der Erfindung ist es vorgesehen, dass der zumindest eine Datensatz durch Abrufen aus gespeicherten Konfigurations-Daten und/oder Nutzungs-Daten in der Konfigurations-Datenbank und/oder Nutzungs-Datenbank gebildet ist. Dadurch wird erreicht, dass entsprechende Daten zuvor durchgeführter Konfigurationen von Geräten dazu verwendet werden können, um eine aktuelle Konfiguration zu verbessern.

In einer Weiterbildung der Erfindung ist es vorgesehen, dass das spezielle Geräte-Modell für das Gerät eine Teilmenge des formalen Geräte-Modells für die Geräteklasse ist.

Dadurch wird erreicht, dass das spezielle Geräte-Modell kleiner ist, als das formale Geräte-Modell und eine Konfiguration daher einfacher und effizienter bestimmt werden kann.

In einer Weiterbildung der Erfindung ist es vorgesehen, dass das dynamische Benutzereingabe-Modell für das Gerät eine Teilmenge des abstrakten Benutzereingabe-Modells für die Geräteklasse ist.

Dadurch wird erreicht, dass das dynamische Benutzereingabe-Modell kleiner ist, als das abstrakten Benutzereingabe-Modells und eine Konfiguration daher einfacher und effizienter bestimmt werden kann.

In einer Weiterbildung der Erfindung ist es vorgesehen, dass die Konfigurations-Daten und die Nutzungs-Daten für das spezielle Geräte-Modell im Schritt g) mittels eines, auf dem Prinzip des maschinellen Lernens beruhenden Verfahrens ausgewertet werden.

Dadurch wird erreicht, dass die Konfigurations-Daten und die Nutzungs-Daten besonders effizient bestimmt werden können.

Die erfindungsgemäße Aufgabe wird auch durch eine Konfigurationsvorrichtung zur optimalen Konfiguration eines Geräts einer Geräteklasse gelöst, umfassend
ein erstes Mittel zum Erfassen eines wissensbasierten, formalen Geräte-Modells der Geräteklasse,
ein zweites Mittel zum Erfassen eines abstrakten Benutzereingabe-Modells für die Geräteklasse,
eine Rechenvorrichtung, welche dazu eingerichtet ist, ein dynamisches Benutzereingabe-Modell für das Gerät unter Verwendung des formalen Geräte-Modells, des abstrakten Benutzereingabe-Modells und zumindest eines Datensatzes, einer Konfigurations-Datenbank oder einer Nutzungs-Datenbank zu bestimmen, und
eine Dialogvorrichtung, welche dazu eingerichtet ist, mithilfe des dynamischen Benutzereingabe-Modells Konfigurations-Daten und Nutzungs-Daten für das Gerät durch den Benutzereingabe-Dialog zu erfassen,
und die Rechenvorrichtung ferner dazu eingerichtet ist,
- einen optimalen Konfigurations-Datensatzes auf Basis der im Schritt e) erfassten Konfigurations-Daten und Nutzungs-Daten für das Gerät festzulegen, und
- die Konfigurations-Daten statistisch auszuwerten und in der Konfigurations-Datenbank abzuspeichern, und
- die Nutzungs-Daten statistisch auszuwerten und in der in der Nutzungs-Datenbank abzuspeichern, und
eine Steuervorrichtung, welche dazu eingerichtet ist, das Gerät mit dem optimalen Konfigurations-Datensatz zu konfigurieren, und
die Konfigurationsvorrichtung dazu eingerichtet ist, das erfindungsgemäße Verfahren auszuführen.

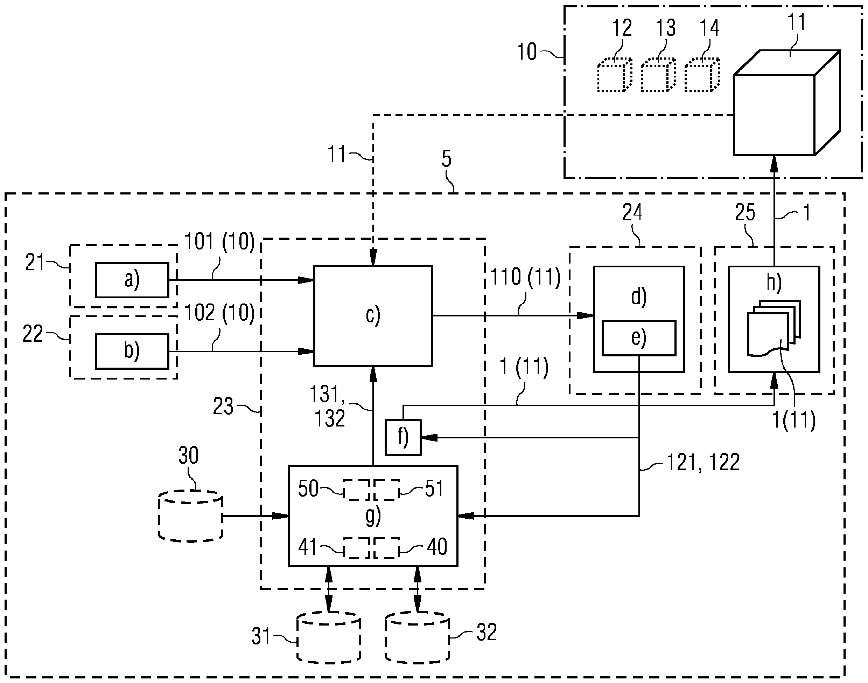

Die Erfindung wird nachfolgend anhand eines in der beigeschlossenen Zeichnung dargestellten Ausführungsbeispiels näher erläutert. Die Figur zeigt symbolisch ein Ausführungsbeispiel für das erfindungsgemäßen Verfahren mit einer beispielhaften Darstellung der Verfahrensschritte als auch ein Ausführungsbeispiel für eine erfindungsgemäße Vorrichtung. Andere Varianten der Reihenfolge der Verfahrensschritte sind ebenso möglich.

Das dargestellte Verfahren zur optimalen Konfiguration eines Geräts 11 einer Geräteklasse 10 umfasst folgende Schritte:
a) Erfassen eines wissensbasierten, formalen Geräte-Modells 101 der Geräteklasse 10,
b) Erfassen eines abstrakten Benutzereingabe-Modells 102 für die Geräteklasse 10,
c) Bestimmen eines dynamischen Benutzereingabe-Modells 110 für das Gerät 11 unter Verwendung des formalen Geräte-Modells 101, des abstrakten Benutzereingabe-Modells 102 und zweier Datensätze 131, 132 aus einer Konfigurations-Datenbank 31 oder einer Nutzungs-Datenbank 32,
d) Erzeugen eines Benutzereingabe-Dialogs mithilfe des dynamischen Benutzereingabe-Modells 110,
e) Erfassen von Konfigurations-Daten 121 und von Nutzungs-Daten 122 für das Gerät 11 durch den Benutzereingabe-Dialog,
f) Festlegen eines optimalen Konfigurations-Datensatzes 1 auf Basis der im Schritt e) erfassten Konfigurations-Daten 121 und Nutzungs-Daten 122 für das Gerät 11,
g) Statistisches Auswerten und Abspeichern der Konfigurations-Daten 121 in der Konfigurations-Datenbank 31 und der Nutzungs-Daten 122 in der Nutzungs-Datenbank 32,
h) Konfigurieren des Geräts 11 mit dem optimalen Konfigurations-Datensatz 1.

Zunächst erfolgt eine Modellierung eines wissensbasierten Modells (KB Modelling), wobei eine Variabilität eines Produkts oder Geräts 11-14 in Form eines formalen Geräte-Modells 101 erfasst wird. Dabei bezeichnet eine Geräteklasse 10 eine allgemeine Beschreibung eines Geräts, welches in verschiedenen Konfigurationen 11-14 konfiguriert werden kann und dadurch Varianten eines allgemeinen Modells gebildet werden können.

Die Varianten können "constraint"-basiert (Einschränkungsbasiert), "rule"-basiert (Regel-basiert), "feature"-basiert (Merkmals-basiert) etc. sein.

Die constraint-basierte Modellierung ist ein wissenschaftlich erprobter mathematischer Ansatz, bei dem das Ergebnis jeder Entscheidung durch einen minimalen und maximalen Bereich von Grenzen begrenzt wird, wobei +/- unendlich zulässig ist. Bei Entscheidungsvariablen, die eine gemeinsame Einschränkung haben, müssen auch die Lösungswerte innerhalb der Grenzen dieser Einschränkung liegen.

In der Informatik wird ein regelbasiertes System zum Speichern und Manipulieren von Wissen verwendet, um Informationen auf nützliche Weise zu interpretieren. Es wird häufig in Anwendungen und in der Forschung mit künstlicher Intelligenz eingesetzt.

Die merkmalsbasierte Modellierung bezieht sich beispielsweise auf die Konstruktion von Geometrien als Kombination von Formularmerkmalen.

Mittels einer KB Import-Funktion wird das formale Geräte-Modell 101 dem Verfahren zur weiteren Verarbeitung bereitgestellt.

Das abstrakte Benutzereingabe-Modell 102, welches aus einer UI-Spezifikation abgeleitet werden kann, kann beispielsweise auf allgemeine Weise beschreiben, welche Konfigurationsparameter für eine Geräteklasse 10 auf eine bestimmte Weise erfasst werden sollen.

Unter Zuhilfenahme des abstrakten Benutzereingabe-Modells 102 für die Geräteklasse 10 kann das dynamische Benutzereingabe-Modell 110 bestimmt werden. Dabei kann beispielsweise eine Rendering-Vorrichtung angewandt werden, welche das optische Erscheinungsbild des Benutzereingabe-Dialogs erzeugt.

Die UI Spezifikation kann beispielweise eine Anordnung oder eine Navigations-Struktur für den Benutzereingabe-Dialog umfassen, falls dies für das Gerät 11 so vorgesehen ist.

Der Benutzereingabe-Dialog wird dazu verwendet, um die Konfigurationsparameter im Schritt f) für das Gerät 11 zu erfassen, welche in weiterer Folge dazu verwendet werden, das Gerät 11 entsprechend im Schritt h) zu konfigurieren und ein optimal konfiguriertes Gerät zum Betrieb in dem dazu speziell vorgesehenen Gebiet zu erhalten.

Der Benutzereingabe-Dialog wird aber auch dazu verwendet, um Daten über das Benutzerverhalten des Bedieners im Schritt e) zu erfassen und zu sammeln. Dazu können beispielsweise Agenten eingesetzt werden, die Daten während der Bedienung beziehungsweise während der Konfigurationsprozedur über Mausklicks, Navigation in Konfigurationsmenüs oder die Dauer in einzelnen Bereichen der Konfiguration sammeln.

Anschließend erfolgt im Schritt g) eine nachfolgende Datenanalyse von einer Analysevorrichtung 40 und es können statistische Kenngrößen zum Benutzerverhalten während der Konfigurationsprozedur im Schritt d) bestimmt werden, welche in Datenbanken, nämlich der Konfigurations-Datenbank 31 und der Nutzungs-Datenbank 32, gespeichert werden und in nachfolgenden, weiteren Konfigurationen von Geräten der Geräteklasse 10 verwendet werden, um den Benutzereingabe-Dialog weiter zu verbessern.

Die Konfigurations-Datenbank 31 und die Nutzungs-Datenbank 32 können auch durch eine gemeinsame Datenbank gebildet sein.

Im Schritt g) kann eine Anpassungsvorrichtung 41 ("UI Adaption Rule Engine") den Benutzereingabe-Dialog aufgrund der Datensätze 131, 132 verändern, um die Dateneingabe effizienter, einfacher oder verständlicher zu machen.

Dabei kann die Anpassungsvorrichtung 41 auf gespeicherte Daten der Konfigurations-Datenbank 31 und der Nutzungs-Datenbank 32 zugreifen und diese verwenden, um den Benutzereingabe-Dialog anzupassen.

Dazu kann die Anpassungsvorrichtung 41 im Schritt g) auf eine Benutzereingabe-Datenbank 30 zurückgreifen, in welcher verschiedene Arten an Konfigurations-Instruktionen für mögliche UI Anpassungen ("UI Adaption Command Library") enthalten sind, welche für eine Geräteklasse 10 angewandt werden können, sowie verschiedene Design-Richtlinien ("UI Renderer Library") enthalten sind, welche beispielsweise Eingabevarianten zur Parametererfassung beschreiben, um eine Dateneingabe zu erleichtern.

Die Konfigurations-Instruktionen und/oder Design-Richtlinien können von der Anpassungsvorrichtung 41 abhängig vom Ergebnis der Datenanalyse abgerufen und ausgeführt werden.

Es kann im Schritt g) auch vorgesehen sein, dass ein Dialog-Planner 50 ("UI Adaption Planner") und/oder eine Dialog-Ausführungsvorrichtung 51 dazu verwendet wird, den Benutzereingabe-Dialog gemäß spezifischen Vorgaben anzupassen, welche beispielsweise während des Betriebs des Benutzereingabe-Dialogs oder nach einem Neustart der KonfigurationsVorrichtung oder nach Verfügbarkeit einer neuen Variante innerhalb einer Geräteklasse. Die Dialog-Ausführungsvorrichtung kann einen geänderten Benutzereingabe-Dialog nach einer entsprechenden Planung durch den Dialog-Planner umsetzen.

Die Datensätze 131, 132 sind durch Abrufen aus gespeicherten Konfigurations-Daten und/oder Nutzungs-Daten in der Konfigurations-Datenbank 31 und/oder Nutzungs-Datenbank 32 gebildet.

Das spezielle Geräte-Modell für das Gerät 11 ist eine Teilmenge des formalen Geräte-Modells 101 für die Geräteklasse 10.

Das dynamische Benutzereingabe-Modell 110 für das Gerät 11 ist eine Teilmenge des abstrakten Benutzereingabe-Modells 102 für die Geräteklasse 10.

Die Konfigurations-Daten 121 und die Nutzungs-Daten 122 für das spezielle Geräte-Modell werden im Schritt g) mittels eines, auf dem Prinzip des maschinellen Lernens beruhenden Verfahrens ausgewertet.

Ferner zeigt die Figur eine Konfigurationsvorrichtung 5 zur optimalen Konfiguration eines Geräts 11 einer Geräteklasse 10, umfassend
ein erstes Mittel 21 zum Erfassen eines wissensbasierten, formalen Geräte-Modells 101 der Geräteklasse 10,
ein zweites Mittel 22 zum Erfassen eines abstrakten Benutzereingabe-Modells 102 für die Geräteklasse 10,
eine Rechenvorrichtung 23, welche dazu eingerichtet ist, ein dynamisches Benutzereingabe-Modell 110 für das Gerät 11 unter Verwendung des formalen Geräte-Modells 101, des abstrakten Benutzereingabe-Modells 102 und zweier Datensätze 131, 132 einer Konfigurations-Datenbank 31 oder einer Nutzungs-Datenbank 32 zu bestimmen, und
eine Dialogvorrichtung 24, welche dazu eingerichtet ist, mithilfe des dynamischen Benutzereingabe-Modells 110 Konfigurations-Daten 121 und Nutzungs-Daten 122 für das Gerät 11 durch den Benutzereingabe-Dialog zu erfassen,
und die Rechenvorrichtung 23 ferner dazu eingerichtet ist,
- einen optimalen Konfigurations-Datensatzes 1 auf Basis der im Schritt e) erfassten Konfigurations-Daten 121 und Nutzungs-Daten 122 für das Gerät 11 festzulegen, und
- die Konfigurations-Daten 121 statistisch auszuwerten und in der Konfigurations-Datenbank 31 abzuspeichern, und
- die Nutzungs-Daten 122 statistisch auszuwerten und in der in der Nutzungs-Datenbank 32 abzuspeichern, und
eine Steuervorrichtung 25, welche dazu eingerichtet ist, das Gerät 11 mit dem optimalen Konfigurations-Datensatz 1 zu konfigurieren.

Die Konfigurationsvorrichtung 5 ist dazu eingerichtet, das erfindungsgemäße Verfahren auszuführen.

### Bezugszeichenliste:

- 1: optimaler Konfigurations-Datensatz
- 5: Konfigurationsvorrichtung
- 10: Geräteklasse
- 11-14: Gerät
- 21, 22: Eingabemittel
- 23: Rechenvorrichtung
- 24: Dialogvorrichtung
- 25: Steuervorrichtung
- 30: Benutzereingabe-Datenbank
- 31: Konfigurations-Datenbank
- 32: Nutzungs-Datenbank
- 40: Analysevorrichtung
- 41: Anpassungsvorrichtung
- 50: Dialog-Planner
- 51: Dialog-Ausführungsvorrichtung
- 101: formales Geräte-Modell für Geräteklasse
- 102: abstraktes Benutzereingabe-Modell für Geräteklasse
- 110: dynamisches Benutzereingabe-Modell für Gerät
- 121: Konfigurations-Daten
- 122: Nutzungs-Daten
- 131, 132: Datensatz

## Patentansprüche

1. Verfahren zur optimalen Konfiguration eines Geräts (11) einer Geräteklasse (10), wobei folgende Schritte ausgeführt werden:
a) Erfassen eines wissensbasierten, formalen Geräte-Modells (101) der Geräteklasse (10),
b) Erfassen eines abstrakten Benutzereingabe-Modells (102) für die Geräteklasse (10),
c) Bestimmen eines dynamischen Benutzereingabe-Modells (110) für das Gerät (11) unter Verwendung des formalen Geräte-Modells (101), des abstrakten Benutzereingabe-Modells (102) und zumindest eines Datensatzes (131, 132) aus einer Konfigurations-Datenbank (31) oder einer Nutzungs-Datenbank (32),
d) Erzeugen eines Benutzereingabe-Dialogs mithilfe des dynamischen Benutzereingabe-Modells (110),
e) Erfassen von Konfigurations-Daten (121) und von Nutzungs-Daten (122) für das Gerät (11) durch den Benutzereingabe-Dialog,
f) Festlegen eines optimalen Konfigurations-Datensatzes (1) auf Basis der im Schritt e) erfassten Konfigurations-Daten (121) und Nutzungs-Daten (122) für das Gerät (11),
g) Statistisches Auswerten und Abspeichern der Konfigurations-Daten (121) in der Konfigurations-Datenbank (31) und der Nutzungs-Daten (122) in der Nutzungs-Datenbank (32),
h) Konfigurieren des Geräts (11) mit dem optimalen Konfigurations-Datensatz (1).

2. Verfahren nach dem vorhergehenden Anspruch, wobei der zumindest eine Datensatz (131, 132) durch Abrufen aus gespeicherten Konfigurations-Daten und/oder Nutzungs-Daten in der Konfigurations-Datenbank (31) und/oder Nutzungs-Datenbank (32) gebildet ist.

3. Verfahren nach einem der vorhergehenden Ansprüche, wobei das spezielle Geräte-Modell für das Gerät (11) eine Teilmenge des formalen Geräte-Modells (101) für die Geräteklasse (10) ist.

4. Verfahren nach einem der vorhergehenden Ansprüche, wobei das dynamische Benutzereingabe-Modell (110) für das Gerät (11) eine Teilmenge des abstrakten Benutzereingabe-Modells (102) für die Geräteklasse (10) ist.

5. Verfahren nach dem vorhergehenden Anspruch, wobei die Konfigurations-Daten (121) und die Nutzungs-Daten (122) für das spezielle Geräte-Modell im Schritt g) mittels eines, auf dem Prinzip des maschinellen Lernens beruhenden Verfahrens ausgewertet werden.

6. Konfigurationsvorrichtung (5) zur optimalen Konfiguration eines Geräts (11) einer Geräteklasse (10), umfassend
ein erstes Mittel (21) zum Erfassen eines wissensbasierten, formalen Geräte-Modells (101) der Geräteklasse (10),
ein zweites Mittel (22) zum Erfassen eines abstrakten Benutzereingabe-Modells (102) für die Geräteklasse (10),
eine Rechenvorrichtung (23), welche dazu eingerichtet ist, ein dynamisches Benutzereingabe-Modell (110) für das Gerät (11) unter Verwendung des formalen Geräte-Modells (101), des abstrakten Benutzereingabe-Modells (102) und zumindest eines Datensatzes (131, 132) einer Konfigurations-Datenbank (31) oder einer Nutzungs-Datenbank (32) zu bestimmen, und
eine Dialogvorrichtung (24), welche dazu eingerichtet ist, mithilfe des dynamischen Benutzereingabe-Modells (110) Konfigurations-Daten (121) und Nutzungs-Daten (122) für das Gerät (11) durch den Benutzereingabe-Dialog zu erfassen,
und die Rechenvorrichtung (23) ferner dazu eingerichtet ist,
• einen optimalen Konfigurations-Datensatzes (1) auf Basis der im Schritt e) erfassten Konfigurations-Daten (121) und Nutzungs-Daten (122) für das Gerät (11) festzulegen, und
• die Konfigurations-Daten (121) statistisch auszuwerten und in der Konfigurations-Datenbank (31) abzuspeichern, und
• die Nutzungs-Daten (122) statistisch auszuwerten und in der in der Nutzungs-Datenbank (32) abzuspeichern, und
eine Steuervorrichtung (25), welche dazu eingerichtet ist, das Gerät (11) mit dem optimalen Konfigurations-Datensatz (1) zu konfigurieren, und
die Konfigurationsvorrichtung (5) dazu eingerichtet ist, das Verfahren nach einem der vorhergehenden Ansprüche auszuführen.
